# EUROPEAN PATENT APPLICATION

(11) **EP 0 915 059 A1**
(43) Date of publication of application: **12.05.1999**
(21) Application number: 97913562.1
(22) Date of filing: 23.10.1997
(51) Int. Cl.: C02F 1/46, C02F 1/28, C02F 1/58, C02F 1/62, C25B 9/00

(54) **PROCESS FOR THE ELECTROCHEMICALLY CONTROLLED ABSORPTION OF SOLUBLE ORGANIC SUBSTANCES AND OF HEAVY METAL IONS EXTRACTED FROM AQUEOUS SOLUTIONS, AND CORRESPONDING APPARATUS**

(30) Priority: 19.03.1997 RU 97103744
(71) Applicant: Western Pacific Company, Inc. Ltd., Moscow, 127247 (RU)
(72) Inventor: NAIDA, Nikolai Nikolaevich, Moscow, 105275 (RU); GOLDIN, Mark Mikhailovich, Moscow, 129626 (RU)
(74) Representative: Bankes, Stephen Charles Digby
(86) International application number: RU9700337
(87) International publication number: WO9841477

(57) **Abstract**

The invention relates to a process for the electrochemically controlled absorption of soluble organic substances and heavy metal ions extracted from aqueous solutions. Said process consists in allowing the passage of aqueous solutions containing organic substances and the ions of heavy metals through a porous and granular carbonic sorbent. This porous carbonic sorbent, which constitutes a filter with a specific surface of 100 - 1200 m²/g, is placed in an electrolyzer - mass exchanger which is divided by a nonconducting partitioning diaphragm into anode and cathode chambers. The following elements are run through the two chambers: an electrolyte, at the speed of 100 - 300 mm/min., composed of 0.1 - 10 % of a mineral saline aqueous solution for the anode chamber; an anolyte, composed of the same solution in addition to 10⁻⁶ - 10⁻⁸ % of a heavy metal saline solution for the cathode chamber; and a catholyte. A constant current flow is used to electrochemically process the carbonic materials in a density range of 1 - 10 A/g for 30 - 90 minutes. The polarised carbonic materials are washed with water that does not contain any added organic or inorganic substances for 5 - 10 minutes. Using a voltameter and a reference electrode, the values of the potentials, that is the value Eₛₜ of the polarised carbonic materials, are measured. A value of Eₛₜ ranging from 0.2 - 0.4 B (Ag/AgCl) for the anode-modified form, and from -0.1 - (-0.5) B (Ag/AgCl) for the cathode-modified form signifies that the above-mentioned are ready for application.

## Description

The invention falls into the field of electrochemical processing of water solutions and production of sorbents.

Method of toxic compounds' extraction of biological environment with sorption processes (1) is known. Sorption detoxification is realized by contact of biological liquid with solid granulated sorbent, usually activated carbon. But this method does not provide high degree of sorption nor sorbent regeneration. Method of toxic materials sorption out of biological liquids (2) is known. Using this method toxic compounds are extracted out of liquid during hemosorption. But this method does not provide high degree of sorption and detoxification. Method of sorbent production (3) is known allowing selective sorption of strontium and its concentration out of seawater, waste and natural highly mineralized water. But this method does not permit heavy metals extraction from water. The proposed invention shows that changing sorbent's potential it is possible to control sorption of toxic materials out of water and biological environment, so as to regenerate sorbents. Installation ― electrolyzer for activated carbon granules processing (4) is known designed to obtain polarized activated carbon granules. The disadvantage of this installation is impossibility to obtain simultaneously cathodically and anodically polarized carbon and use it to clean water simultaneously of organic materials and heavy metals salts. In the proposed invention polarization is carried out by external source and the parameters of potentials are fixed with a built-in reference electrode.

The problem to be resolved by this invention is a simultaneous extraction of soluble organic materials, ions of heavy metals and toxic materials out of water solutions. The technical result is improvement of carbon sorbent functionality by regenerating it during the work. The way to achieve it is the following: porous carbon material (sorbent filter) 2, 3 with a specific superficies 100-1200 m²/g is placed to electrolyzer - mass exchanger 1 where cathodic and anodic chambers 2 and 3 are separated with diaphragm 5. Granulated carbon material has titanic current suppliers 4. Water solution flows through cathodic and anodic chambers at the speed of 200 ml/min. As the water solution an electrolyte may be used ― 2% solution of NaCl for anodic processing and the same solution with 10⁻⁶ ― 10⁻⁸ % silver or copper salt solution added for cathodic processing. Electrochemical processing of the carbon materials is carried out during 30-90 minutes within the range of current density of 1-10 A/g. The polarized carbon materials are washed up with water during 5-10 min. The values of potentials of cathodically and anodically polarized carbon filters are measured with high input resistance voltmeter 9 and reference electrode 10. If the value E_{st.} = - 0.2 ― 0.4 V (Ag/AgCl) for anodically modified sample and E_{st.} = -0.1 ― (-0.5) V (Ag/AgCl) for cathodically modified sample, then the materials are ready to use. If E_{cath.} has moved to the positive zone up to the values more than (-0.1) V (Ag/AgCl) and E_{an.} has become more positive than (+0.5) V (Ag/AgCl), then polarized carbon filters are regenerated. For this purpose clean water flows through the mass exchanger, and the source of direct current 8 supplies during 30 minutes positive potential to the cathodically polarized filter, and negative potential to the anodically polarized filter. Then the polarity is changed and the same regimen is kept during another 30 minutes. If E_{cath.} has moved to the positive zone up to the values more than (-0.1) V (Ag/AgCl) and E_{an.} has become more positive than (+0.5) V (Ag/AgCl), then polarized carbon filters are regenerated. After this the mass exchanger is ready for work. Preliminary processed filters ― sorbents increase bactericidal properties of the purified water solution.

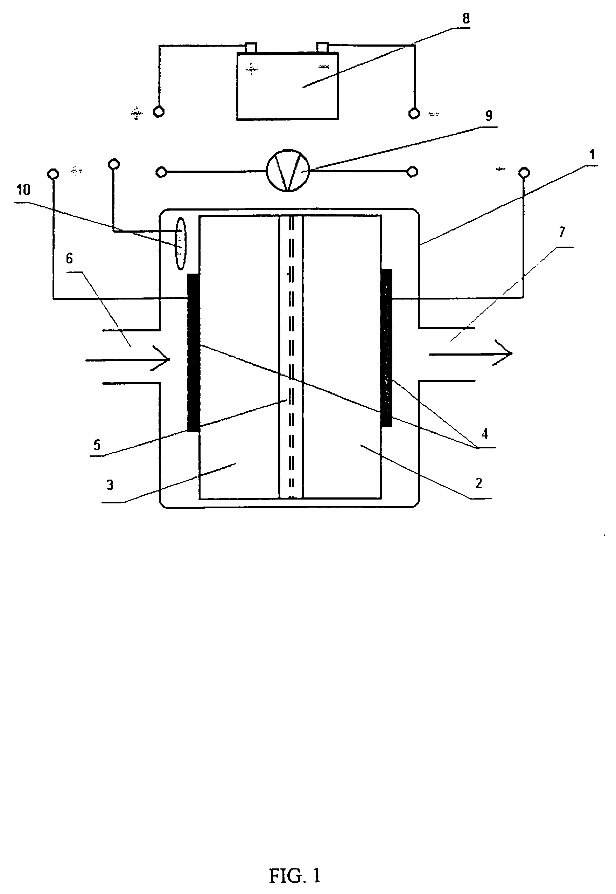

Figure 1 shows the scheme of electrolyzer - mass exchanger: 1 ― case of the electrolyzer - mass exchanger; 2 ― cathodically polarized carbon filter; 3 ― anodically polarized carbon filter; 4 ― current suppliers of the carbon filters; 5 ― diaphragm ― separator; 6 ― input of the purified water solution; 7 - output of the purified water solution; 8 ― DC power source; 9 ― voltmeter; 10 ― reference electrode.

Water solution polluted with soluble organic materials and ions of heavy metals flows to electrolyzer ― mass exchanger by connecting pipe 6. The solution goes through anodically and cathodically polarized carbon filters 2, 3, absorbing the soluble organic materials, toxins and ions of heavy metals out of the water solution. Then the purified solution leaves the installation through the output 7. Potential values of anodically and cathodically polarized carbon filters are measured with voltmeter 9 and reference electrode 10.

Present method of electrochemically controlled sorption of soluble organic materials, toxins and ions of heavy metals out of water solutions and the installation described can be used in industrial purifying of technological solutions of any kind and final purifying of potable water by connecting it to the appropriate communications.

### REFERENCE CITED

1. M.M. Goldin, E.A. Luzhnikov. About the influence of absorbtion potential on the sorbtion of toxic impurites. Transactions of the Academy of Sciences of the USSR. Electrochemistry. Vol. XV, Nº 9. Moscow, 1979.
2. SU, Inventor's certificate Nº 784880, A 61 M1/03.
3. A.N. Abakarov, D.A. Sveshnikova, A.V. Dribinskiy, M.M. Gafurov.
   Absorbting properties of the polarizating coals. Adsorbtion of the ions Sr⁺² and Ca⁺² of the preliminary polarizating coals. Journal of the Physical Chemistry, 1993, vol. 67, Nº 7, p. 1444-1447.
4. SU, Inventor's certificate Nº 1468853 A1, C25 B1/00, 1989.
   (Moscow Scientific Research Institute after N.V. Sklifasovskiy and Institute Electrochemistry after A.N. Frumkin).

## Claims

1. Process for the electrochemically controlled absorption of soluble organic substance and of heavy metals ions extracted from aqueous solutions, comprising passage of aqueous solutions, containing organic substances and the ions of heavy metals, through a porous and granular carbonic sorbent, wherein the said porous carbonic sorbent - a filter with specific surface of 100 - 1200 m²/g is placed in an electrolyzer - mass exchanger divided by a nonconducting diafragm into anode and cathode chambers wherethrough at the speed of 100-300 mm/min, passes electrolyte composed of 0.1 - 10 % of a mineral saline aqueous solution - anolyte for the anode chamber composed of the same solution in addition to 10⁻⁶ - 10⁻⁸ % of heavy metals saline solution - catholyte for the said cathode chamber, by means of a constant current flow is used to electrochemically process the carbonic materials in a density range of 1 - 10 A/g for 30 - 90 minutes, the polarised carbonic materials are washed with water that does not contain any added organic or inorganic substances for 5 - 10 minutes, by means of voltmeter and a reference electrode are measured the values of the potentials - Eₛₜ of the polarised carbonic materials, a value of Eₛₜ ranging from 0.2 - 0.4 V (Ag/AgCl) for the anode-modified form and Eₛₜ = - 0.1 - (-0.5) V (Ag/AgCl) for a cathode-modified form siguifies that the abovementioned materials are ready for applications.

2. A apparatus for realising a process for the electrochemically controlled absorption from aqueous solutions according to claim 1, comprising an electrolyzer body divided by a partition - a diafragm into anode and cathode carbonic chambers, whwrein the said anode and cathode chambers are filled with porous granular carbonic materials for anode and cathode polarisation, the said electrolyzer serves as a mass exchanger for simultaneous removal from water of toxic impurities, organic substances and heavy metals ions which can be adsorbed by the anode and cathode, a built - in reference electrode records the values of potentials Eₛₜ.
